# EUROPÄISCHE PATENTANMELDUNG

(11) **EP 1 278 288 A2**
(43) Veröffentlichungstag der Anmeldung: **22.01.2003**
(21) Anmeldenummer: 02015332.6
(22) Anmeldetag: 10.07.2002
(51) Int. Cl.: H02K 5/22, H02K 3/52

(54) **Aussenläufermotor**

(30) Priorität: 17.07.2001 DE 10134815
(71) Anmelder: Ziehl-Abegg AG, 74653 Künzelsau (DE)
(72) Erfinder: Kress, Volker, 74635 Kupferzell (DE); Hornung, Matthias, 97959 Assamstadt (DE)
(74) Vertreter: Maucher W., Dipl.-Ing.

(57) **Zusammenfassung**

Ein Außenläufermotor hat ein Wicklungen aufweisendes Statorpaket, ein Stator-Gehäuse sowie einen Rotor und weist eine Anordnung zum Verbinden der Stator-Wicklungsenden mit einem Anschlußkabel auf. Stirnendig ist eine auf das Stator-Blechpaket (4) aufsetzbare, ringförmige Klemm- und Anschlußplatte (15) vorgesehen, die Aufnahmekammern (21) jeweils für ein Wicklungsdrahtende aufweist. Weiterhin ist eine auf die Klemm- und Anschlußplatte (15) aufsetzbare, ringförmige Verbindungsplatte (16) mit in die Aufnahmekammern (21) eingreifenden Steckern (26) oder dergleichen elektrischen Verbindungselementen sowie mit einer Steckerleiste (17), deren Anschlüsse (28) mit den Steckern (26) elektrisch verbunden sind, vorgesehen. Das Statorgehäuse (3) weist eine Durchtrittsöffnung (32) auf, durch welche die Steckerleiste (17) bei mit dem Statorpaket (4) verbundenem Statorgehäuse (3), von außen zugänglich ist und mit der eine für unterschiedliche, elektrische Anschlußarten programmierbarer Anschlußstecker (10) verbindbar ist, der Anschlüsse für ein Anschlußkabel (11) aufweist.

Durch diese Verbindungsanordnung ist ein automatisierter Fertigungsablauf ohne manuellen Eingriff möglich.

Außerdem erfolgt die Fertigung des Stators ohne hinderliches Anschlußkabel und die elektrische Anschlußart bleibt zunächst bei der Fertigung unberücksichtigt und kann vor der Auslieferung des Motors nach Kundenwunsch auf einfache Weise durch den programmierbaren Anschlußstecker vorgenommen werden.

## Beschreibung

Die Erfindung bezieht sich auf einen Außenläufermotor mit einem Wicklungen aufweisenden Statorpaket, einem Stator-Gehäuse sowie einem Rotor und mit einer Anordnung zum Verbinden der Stator-Wicklungsenden mit einem Anschlußkabel wobei eine stirnendig auf das Stator-Blechpaket aufsetzbare, ringförmige Klemm- und Anschlußplatte vorgesehen ist, die Aufnahmekammern jeweils für wenigstens ein Wicklungsdrahtende und/oder ein Zwischenkontaktelement dafür aufweist.

Bei solchen Außenläufermotoren müssen die Wicklungsenden so miteinander verbunden werden, daß der Motor je nach geforderter, elektrischer Betriebsart, d.h. bei 3-Phasen-Betrieb in Stern- oder Dreieckschaltung oder bei 1-Phasen-Betrieb für Rechts- oder Linkslauf, geschaltet ist.
Im einfachsten Fall werden die Wicklungsenden intern in der vorgesehenen Verschaltung miteinander verlötet und ein Anschlußkabel daran angeklemmt oder verlötet.

Weiterhin ist es bekannt, die Wicklungsenden auf äußere Kontakte herauszuführen und durch Einlöten von Brücken oder mit Hilfe eines aufgesteckten Schalters in der jeweils gewünschten Form zu verschalten.
Aus der EP 0 029 328 ist ein Elektromotor in Innenläuferbauweise bekannt, bei dem ein solcher, aufsteckbarer Schalter vorgesehen ist, an dem sich Anschlüsse für ein Anschlußkabel befinden. Mit Hilfe des Schalters kann die Drehzahl verstellt werden. Die Wicklungsenden sind dabei an einer Stelle der mehrere Anzapfungen aufweisenden Spule angeordnet.

Aus der DE 34 47 826 ist ein Außenläufermotor bekannt, bei dem ein Anschlußkabel über Steckverbindungen mit den Stator-Wicklungsenden verbindbar ist. Damit ist zwar unter Berücksichtigung der bei Außenläufermotoren beengten Platzverhältnisse eine platzsparende Verbindungsanordnung zwischen den Wicklungsenden und einem Anschlußkabel gebildet, jedoch ist diese Verbindungsanordnung auf wenige Anschlußverbindungen begrenzt. Sollen z.B. für einen 3-Phasen-Motor beispielsweise wenigstens sechs Wicklungsenden herausgeführt werden, so besteht bei dieser Konstruktion die Gefahr, daß der Abstand der elektrischen Leiter für die geforderte Spannungsfestigkeit nicht mehr ausreicht. Außerdem sind für die Fertigung noch manuelle Montage-Handhabungen erforderlich.

Aus der DE 298 17 869 U1 ist ein gattungsgemäßer Außenläufermotor mit einem Stator bekannt, an dem eine Verdrahtungsplatte mit Teilkammern angebracht ist, die zusammen mit Teilkammern einer Isolier-Endscheibe eine Mehrfach-Kontaktkammer bilden, in die ein die Teilkammern brückenartig verbindendes Kontaktelement einsetzbar ist und einen durch die eine Teilkammer verlaufenden Wicklungsdraht kontaktiert. In jede Teilkammer kann auch ein Anschlußleiter angedrückt und mit dem Kontaktelement elektrisch verbunden werden.
Damit soll eine automatisierte Herstellung ermöglicht werden. Ein nachträgliches Umstellen auf unterschiedliche elektrische Anschlußarten ist jedoch nicht vorgesehen.

Aufgabe der vorliegenden Erfindung ist es, eine Anschlußanordnung zum Verbinden der Wicklungsenden mit einem Anschlußkabel bei einem Außenläufermotor zu schaffen, die einen automatisierten Fertigungsablauf ermöglicht und die Möglichkeit bietet, unter den bei Außenläufermotoren vorgegebenen, beengten Platzverhältnissen alle für einen Mehrphasenbetrieb notwendigen Anschlüsse nach außen zu führen und wobei trotzdem eine hohe Spannungsfestigkeit gegeben ist. Schließlich soll das Umstellen auf unterschiedliche, elektrische Betriebsarten einfach durchführbar sein.

Zur Lösung dieser Aufgabe wird vorgeschlagen, daß eine auf die Klemm- und Anschlußplatte aufsetzbare, ringförmige Verbindungsplatte mit in die Aufnahmekammern oder die Zwischenkontaktelemente eingreifenden Steckern oder dergleichen elektrischen Verbindungselementen sowie mit einer Steckerleiste oder Kontaktleiste, deren Anschlüsse mit den Steckern elektrisch verbunden sind, vorgesehen ist und daß das Statorgehäuse eine Durchtrittsöffnung aufweist, durch welche die Steckerleiste oder Kontaktleiste bei mit dem Statorpaket verbundenem Statorgehäuse von außen zugänglich ist und mit der ein Anschlußstecker verbunden ist, der Anschlüsse für die Steckerleisten-Anschlüsse sowie ein Anschlußkabel aufweist.

Durch diese Verbindungsanordnung können alle für einen 3-Phasen-Betrieb notwendigen Wicklungsenden problemlos nach außen geführt werden, wobei einerseits die im Inneren und andererseits die weiter außen jeweils vorhandenen, unterschiedlichen Platzverhältnisse günstig ausgenützt werden können. Die Leiterführungen können dadurch für eine hohe Spannungsfestigkeit einen entsprechend großen Abstand aufweisen. Weiterhin ist besonders vorteilhaft, daß damit ein automatisierter Fertigungsablauf ohne manuellen Eingriff möglich ist, weil alle Komponenten der Verbindungsanordnung nacheinander aufsteckbar sind und die Verbindungen zwischen den Wicklungsenden und der Klemm- und Anschlußplatte sowie der Verbindungsplatte und dem Anschlußstecker dabei automatisch hergestellt werden.
Diese Fertigung des Stators erfolgt ohne hinderliches Anschlußkabel, da dieses erst nach Fertigstellung des Stators oder des kompletten Motors in der gewünschten Ausführung angeschlossen wird. Auch die elektrische Anschlußart bleibt zunächst bei der Fertigung unberücksichtigt und kann vor der Auslieferung des Motors nach Kundenwunsch auf einfache Weise von außen an dem Anschlußstecker vorgenommen werden.

Dies kann nach einer Weiterbildung der Erfindung dadurch erfolgen, daß der Anschlußstecker, an dem die einzelnen Wicklungsenden zugänglich sind, mittels Leiterbrücken auf unterschiedliche elektrische Anschlußarten wie Stern- oder Dreieckschaltung bei dreiphasiger Ausführung oder Rechts- bzw. Linkslauf bei einphasiger Ausführung, umprogrammierbar ist.

Vorteilhafterweise weist die Klemm- und Anschlußplatte einen radialen Ringflansch mit dem Blechschnitt des Stators entsprechenden Ausnehmungen auf, wobei sich an den Innenrand des radialen Ringflansches ein etwa axial orientierter Anschlußflansch mit am freien Randbereich befindlichen Aufnahmekammern anschließt. Dadurch können die Aufnahmekammern mit größtmöglichem Abstand zueinander angeordnet sein, und es ist eine automatisierte Ablage der Wickeldrahtenden in diese Aufnahmekammern durch die Wickelmaschine möglich. Die Klemmund Anschlußplatte bildet einen stirnendigen Abschluß des Statorpaketes und wird beim Wickeln der Stator-Wicklungen mit eingewickelt.
Gegebenenfalls kann die einen radialen Ringflansch aufweisende Klemm- und Anschlußplatte an dessen Außenrand Vorsprünge mit dort befindlichen Aufnahmekammern aufweisen. Es steht an diesem Außenrand ein größerer Umfangsbereich zur Verfügung, so daß unter anderem bei einer sehr hohen Anzahl von Wicklungsenden mehr Platz für Aufnahmekammern vorhanden ist.

Zweckmäßigerweise sind die Stecker der Verbindungsplatte entsprechend der Lage der Aufnahmekammern der Klemm- und Anschlußplatte angeordnet, wobei vorzugsweise als flache Leiterbahnen einer Platine ausgebildete Verbindungsleitungen zu den einzelnen Kontakten der Kontaktleiste führen.
Die Verbindungsplatte kann dadurch in axialer Richtung auf die Klemm- und Anschlußplatte aufgesteckt werden, was automatisiert erfolgen kann. Dabei erfolgt die Leiterführung von den insbesondere am Umfang verteilt angeordneten Kontaktstellen an der Klemm- und Anschlußplatte auf die insbesondere gerade Kontaktleiste der Verbindungsplatte.
Die dazwischen befindlichen, vorzugsweise als flache Leiterbahnen ausgebildeten Verbindungsleitungen verlaufen zweckmäßigerweise von den Steckern der Verbindungsplatte jeweils in Umfangsrichtung auf unterschiedlichen Radien zu den Kontakten der Kontaktleiste, wobei benachbarte Verbindungsleitungen durch Isolierstege oder Isolierwände getrennt sind. Dadurch ist trotz der beengten Platzverhältnisse und der vergleichsweise dicht beieinander liegenden Leiterführung eine hohe Spannungsfestigkeit vorhanden.

Zusätzliche Ausgestaltungen der Erfindung sind in den weiteren Unteransprüchen aufgeführt. Nachstehend ist die Erfindung mit ihren wesentlichen Einzelheiten anhand der Zeichnungen noch näher erläutert.
Es zeigt:
- Fig. 1: eine Längsschnittdarstellung eines Außenläufermotors,
- Fig. 2: eine statorseitige Stirnseitenansicht des in Fig. 1 gezeigten Außenläufermotors,
- Fig. 3: eine Explosionsdarstellung des in Fig. 1 und 2 gezeigten Außenläufermotors,
- Fig. 4: eine Darstellung etwa entsprechend Fig. 3, hier jedoch ohne Darstellung des Rotors,
- Fig. 5: eine perspektivische Ansicht einer Klemm- und Anschlußplatte,
- Fig. 6: eine Innenseitenansicht einer Verbindungsplatte,
- Fig. 7: eine perspektivische Außenansicht der in Fig. 6 gezeigten Verbindungsplatte,
- Fig. 8: eine perspektivische Ansicht eines Statorgehäuses und
- Fig. 9: eine perspektivische Ansicht eines Anschlußsteckers mit Leiterbrücken.

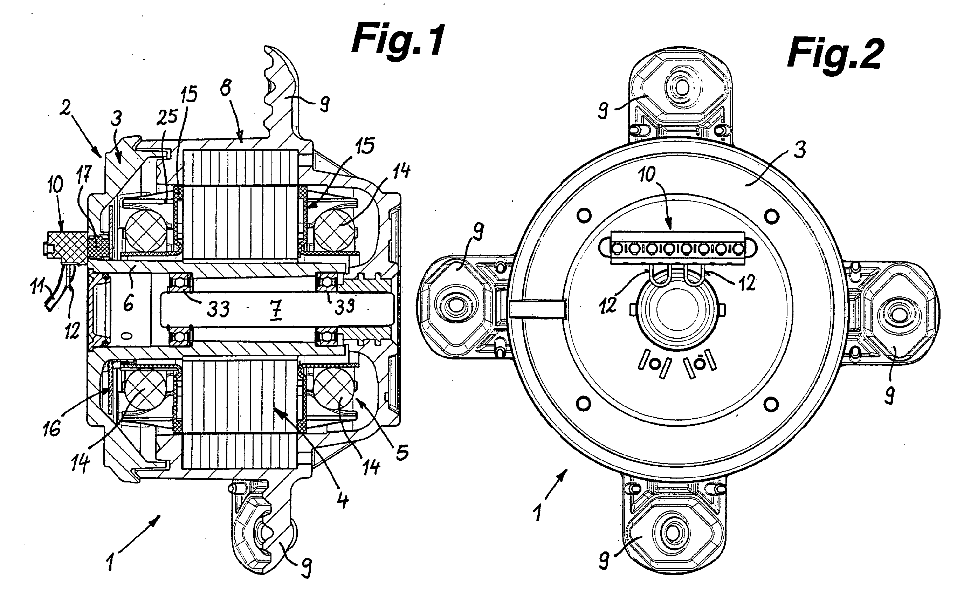

Ein in Fig. 1 im Längsschnitt gezeigter Außenläufer-Motor 1 weist einen Stator 2 mit einem Statorgehäuse 3 sowie mit einem Statorpaket 4 mit Wicklungen 5 auf.

Innerhalb einer zentralen Lagerbuchse 6 des Statorgehäuses 3 ist eine Welle 7 drehbar gelagert, die an ihrem freien, äußeren Ende mit einem im wesentlichen topfförmigen Rotor 8 verbunden ist. Dieser Rotor 8 trägt außenseitig Anschlußflansche 9 für hier nicht dargestellte Lüfterflügel. Der dargestellte Motor 1 ist somit insbesondere als Lüfterantrieb konzipiert (vgl. auch Fig. 2).
Die Enden der Wicklungen 5 sind einzeln nach außen an einen Anschlußstecker 10 geführt, an die ein Anschlußkabel 11 (Fig. 1) anschließbar ist. Außerdem ist der Anschlußstecker 10 mit Hilfe von Leiterbrücken 12 auf unterschiedliche, elektrische Anschlußarten programmierbar. So läßt sich bei 3-Phasen-Betrieb eine Umstellung zwischen Sternschaltung und Dreieckschaltung vornehmen, während bei 1-Phasenbetrieb zwischen Rechtslauf und Linkslauf gewählt werden kann. Im Ausführungsbeispiel ist ein 8-poliger Anschlußstecker 10 zum Anschluß von sechs Wicklungsenden und zwei Anschlüssen für einen Thermokontakt vorgesehen.

Das außerhalb des Motorgehäuses am Anschlußstecker 10 anschließbare Anschlußkabel 11 und auch die Möglichkeit der elektrischen Verschaltung des Motors von außen ergibt eine ganze Reihe von erheblichen Vorteilen. So kann der Motor 1 bzw. dessen Stator 2 in einer praktisch "neutralen" Ausführungsform produziert und auf Lager gelegt werden. Je nach Kundenwunsch kann dann in kürzester Zeit ein Anschlußkabel 11 in der gewünschten Ausführungsform am Anschlußstecker 10 angeschlossen und die elektrische Verschaltung des Motors vorgenommen werden. Es sind somit nicht mehr eine ganze Reihe unterschiedlicher Varianten von Statoren erforderlich, so daß der Dispositionsaufwand verringert und der Lagerplatzbedarf reduziert ist.

Die Verbindungsanordnung zum Verbinden der Statorwicklungsenden mit dem außen liegenden Anschlußstecker 10 beziehungsweise dem Anschlußkabel 11 ist so ausgebildet, daß ein automatisierbarer Fertigungsablauf bei der Montage des Stators möglich ist.

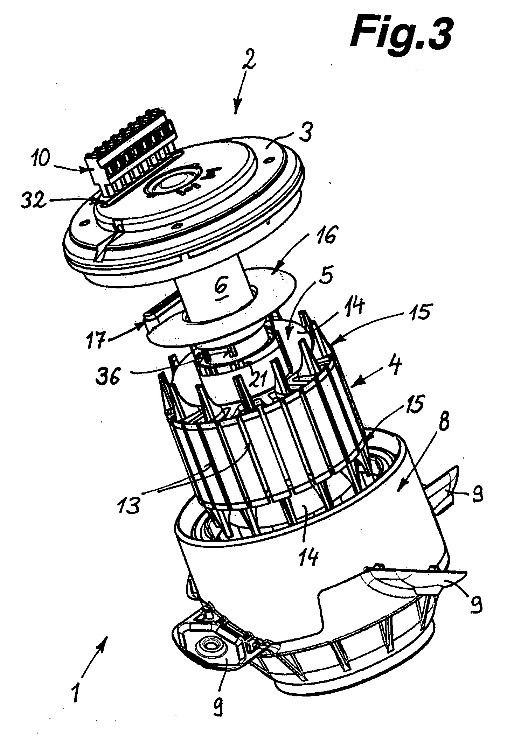

In Fig. 3 ist der Außenläufermotor 1 in auseinandergezogener Lage (Explosionsdarstellung) dargestellt. Deutlich sind das Statorgehäuse 3 mit seiner Lagerbuchse 6, das Statorpaket 4 sowie der Rotor 8 erkennbar. Von den in die Nuten 13 eingelegten Wicklungen 5 sind in den Zeichnungen nur die etwas schematisiert dargestellten Wicklungsköpfe 14 erkennbar.

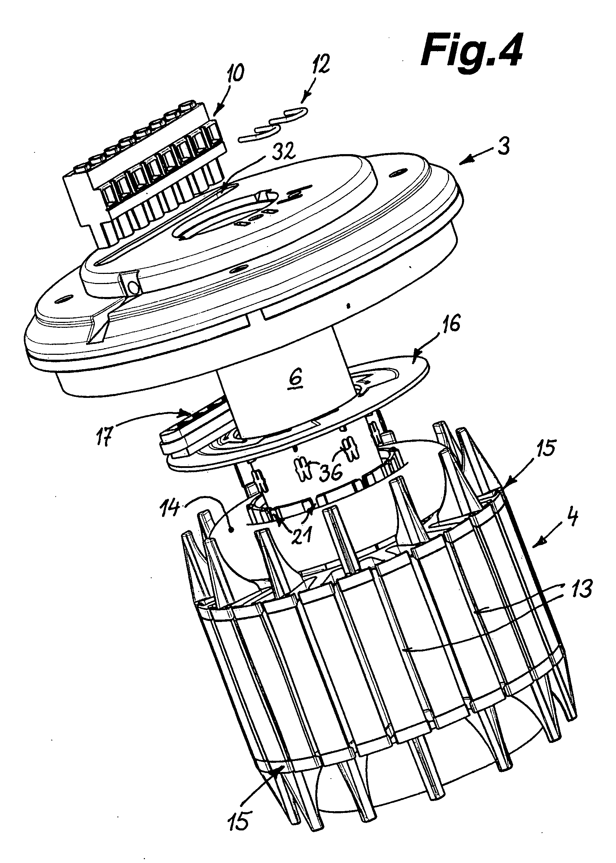

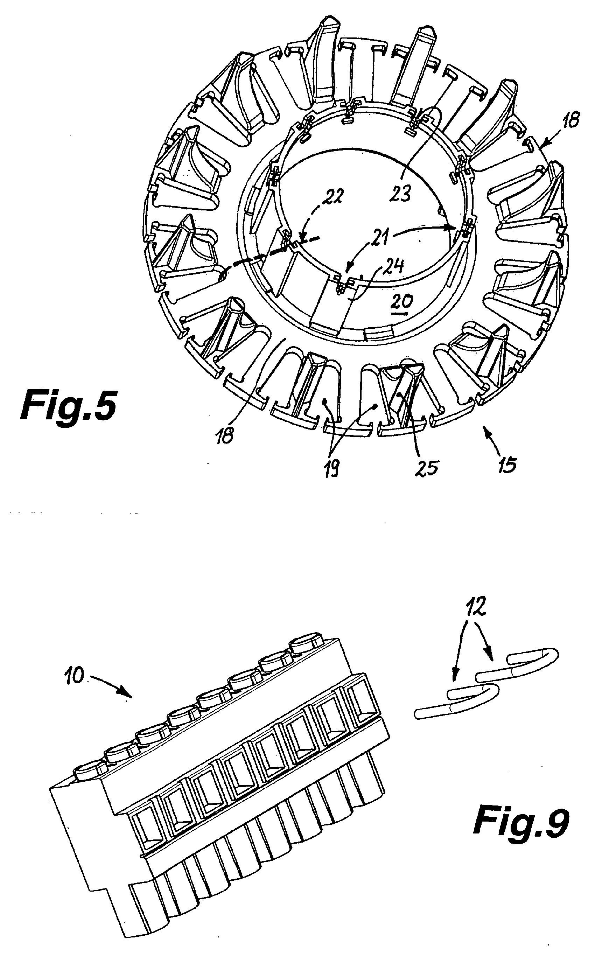

In der Explosionsdarstellung gemäß Fig. 4 ist der Rotor entfernt und es sind hier auch besonders deutlich die Zwischenelemente der Verbindungsanordnung erkennbar. Im einzelnen sind dies eine ringförmige Klemm- und Anschlußplatte 15, eine ringförmige Verbindungsplatte 16 und der bereits vorerwähnte Anschlußstecker 10.
Die Enden der Wicklungen sind an die Klemm- und Anschlußplatte 15 geführt, von dort über elektrische Steckkontakte mit einer an der Verbindungsplatte 16 angebrachten Steckerleiste 17 verbunden, die ihrerseits in Steckkontaktverbindung mit dem Anschlußstecker 10 steht.
Die Klemm- und Anschlußplatte 15 ist perspektivisch in Fig. 5 gezeigt. Sie weist einen radialen Ringflansch 18 mit dem Blechschnitt des Statorpaketes 4 entsprechenden Ausnehmungen 19 auf, an den sich innenrandseitig ein etwa axial orientierter Anschlußflansch 20 mit am freien Randbereich befindlichen Aufnahmekammern 21 anschließt. Diese Aufnahmekammern sind am Umfang des Anschlußflansches 20 verteilt angeordnet. Strichliniert ist bei einer der Aufnahmekammern 21 angedeutet, wie ein Wicklungsdrahtende 22 in eine Aufnahmekammer 21 eingelegt ist.

Es können in die Aufnahmekammern 21 auch mehrere Drähte eingelegt sein, insbesondere, wenn die Wicklungen jeweils mehrdrähtig ausgeführt sind.
Die Aufnahmekammern 21 weisen randoffene Nuten 23 auf, in die die Wicklungsdrahtenden 22 eingelegt werden. Quer zu diesen Aufnahmenuten sind taschenförmige Führungen 24 vorgesehen, in die Flachstecker 26 oder dergleichen Kontakte der Verbindungsplatte 16 oder Zwischenkontaktelemente 36 eingesteckt werden können. In beiden Fällen kann das Kontaktieren der Wicklungsdrahtenden 22 durch Schneid-Klemmtechnik erfolgen, die unter anderem auch ein Abisolieren des Lackdrahtes erübrigt. Außer dieser Schneid-Klemmtechnik kann das Kontaktieren auch durch sogenanntes "Hot-Staking" erfolgen.
Werden Zwischenkontaktelemente 36 eingesetzt, so können diese einerseits Steckerelemente und andererseits Buchsenelemente aufweisen, in die dann Flachstecker der Verbindungsplatte eingreifen können.
Die Zwischenkontaktelemente 36 können auch mit einem Haken versehen sein, um welchen der Wickeldraht von der Wickelmaschine gewickelt wird. Bei einer Hot-Staking Verbindung wird der Haken unter Einfluß von Wärme und Druck an das Zwischenkontaktelement gepreßt und damit die elektrische Verbindung mit dem Drahtende hergestellt.
Zwischen den jeweiligen Ausnehmungen 19 der Klemm- und Anschlußplatte 15 sind noch Vorsprünge 25 erkennbar, die zur Drahtführung beim Wickelvorgang dienen. Unter anderem aus diesem Grund ist eine weitere Klemm- und Anschlußplatte 15 auf der anderen Seite des Statorpaketes 4 angeordnet, wobei diese Platte aber nicht zum Anschließen von Wicklungsdrahtenden dient (vgl. Fig. 1, 3 und 4).
Die Aufnahmekammern 2 für die Wicklungsdrahtenden 22 und gegebenenfalls die Zwischenkontaktelemente 36 können in Abweichung zu dem gezeigten Ausführungsbeispiel auch in den dann gegebenenfalls modifizierten Vorsprüngen 25 integriert sein.

In Fig. 3 und 4 sind der Klemm- und Anschlußplatte 15 zugewandte, lose Zwischenkontaktelemente 36 erkennbar, die in die Aufnahmekammern 21 der Klemm- und Anschlußplatte 15 einsteckbar sind und dabei die eingelegten Wicklungsdrahtenden 22 (Fig.5) kontaktieren. Die hier nicht erkennbaren Flachstecker 26 der Verbindungsplatte 16 greifen nach dem Zusammenführen der Klemm- und Anschlußplatte 15 und der Verbindungsplatte 16 in diese Zwischenkontaktelemente 36 ein.

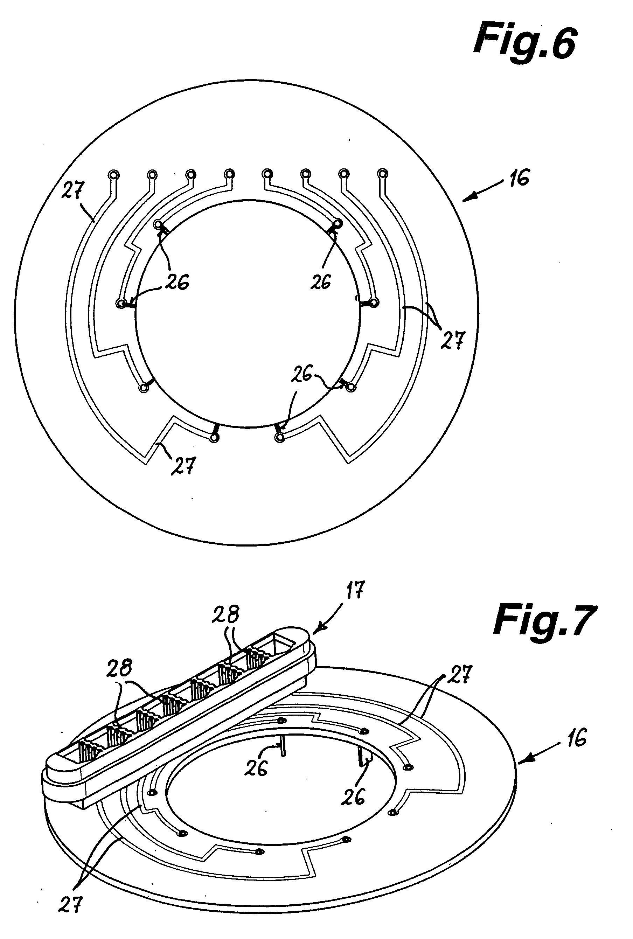

Fig. 6 zeigt in einer Innenseitenansicht die Verbindungsplatte 16, die im Ausführungsbeispiel als gedruckte Schaltung mit einer Platine und flachen Leiterbahnen 27 ausgebildet ist. An den kreisförmig angeordneten Enden der Leiterbahnen 27 sind die Stecker 26 vorgesehen. Die Leiterbahnen 27 bilden Verbindungsleitungen, die zu den einzelnen Kontakten 28 der Steckerleiste 17 führen. Wie gut in Fig. 6 erkennbar, verlaufen die als Leiterbahnen 27 ausgebildeten Verbindungsleitungen jeweils in Umfangsrichtung der Verbindungsplatte 16 auf unterschiedlichen Radien nebeneinander. Gegebenenfalls können zwischen den benachbarten Leiterbahnen 27 jeweils Isolierstege vorgesehen sein.
Die Steckerleiste 17 (Fig.7) der Verbindungsplatte 16 ist etwa tangential verlaufend als gerade Kontaktleiste ausgebildet, so daß die am Umfang verteilten Verbindungsstellen mit den Wicklungsdrahtenden 22 an eine praktisch zentrale Stelle geführt sind.

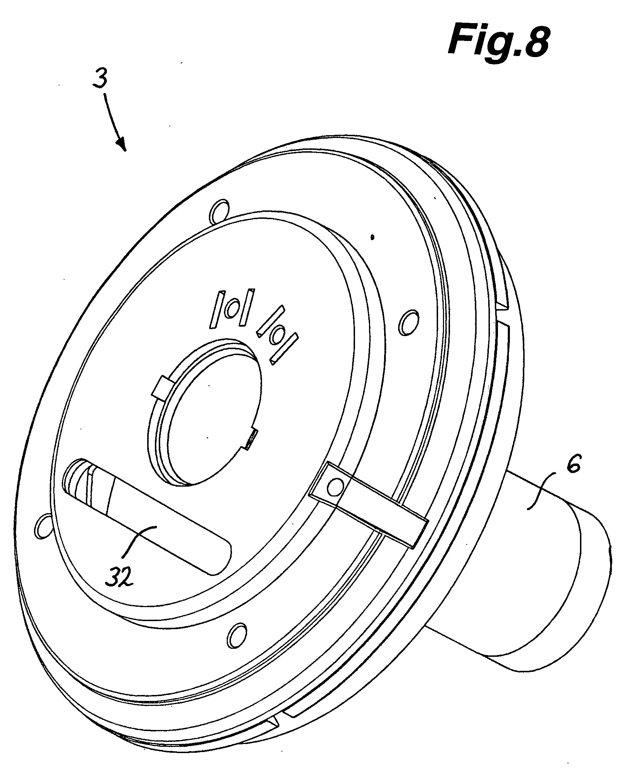

Die Außenseitenansicht der Verbindungsplatte 16 gemäß Fig. 7 zeigt die sockelartig vorspringende Steckerleiste 17, die über eine Durchtrittsöffnung 32 in dem Statorgehäuse 3 (Fig. 8) zugänglich ist. Dadurch kann bei fertigmontiertem Stator der Anschlußstecker 10 mit der Steckerleiste 17 verbunden, insbesondere aufgesteckt werden und es kann, wie eingangs erwähnt, mit Hilfe von Leiterbrücken 12 ein Programmieren des Anschlußsteckers 10 und somit der Steckerleiste 17 für unterschiedliche, elektrische Verschaltungen vorgenommen werden.

Der Anschlußstecker 10 mit dem angeschlossenen Ende des Anschlußkabels 11 können noch durch einen Schutzdeckel, der hier nicht dargestellt ist, abgedeckt sein.

Das Statorgehäuse 3 mit seiner Lagerbuchse 6, die Verbindungsplatte 16, die Klemm- und Anschlußplatte 15 und das Statorpaket 4 sind koaxial zueinander angeordnet, wobei die Lagerbuchse 6 die Verbindungsplatte 16 und die Klemm- und Anschlußplatte 15 durchgreift und innerhalb des Statorpaketes 4 eine Aufnahme für zwei Wellenlager 33 bildet.
Die Verbindungsplatte 16 kann etwa deckelförmig zum Abdecken der anschlußseitigen Wicklungsköpfe 14 ausgebildet sein.
Durch den erfindungsgemäßen Aufbau des Stators und dabei insbesondere der Verbindungsanordnung zwischen den Wicklungsdrahtenden 22 und dem Anschlußkabel 11 ist ein automatisierbarer Fertigungsablauf möglich.
Wesentliche Verfahrensschritte sind dabei das Wickeln der Statorwicklungen, wobei die Wicklungsdrahtenden 22 von einer Wickelmaschine in die Aufnahmekammern 21 abgelegt und dort entweder durch Zwischenkontaktelemente 36 oder durch die Stecker 26 der Verbindungsplatte 16 kontaktiert werden. Im letzteren Fall erfolgt dies mit dem Aufsetzen der Verbindungsplatte 16 auf die Klemm- und Anschlußplatte 15. Die Anschlüsse sind nach diesem Verfahrensschritt bereits an die Steckerleiste 17 geführt, wo sie durch Aufstecken des Anschlußsteckers 10 nach außen geführt und dort zum Festlegen der elektrischen Verschaltung und zum Anschließen des Anschlußkabels 11 zugänglich sind. Vor dem Aufstecken der Steckerleiste wird das Statorgehäuse 3 mit dem Statorpaket 4 verbunden. Der montierte Stator kann in diesem Fertigungsstand, wo die elektrischen Kontaktierungsstellen von außen zugänglich sind, als quasi "neutraler" Stator gelagert werden. Wird der Motor komplettiert, so kann der Rotor auf den Stator montiert werden, wobei aber der elektrische Anschluß immer noch frei wählbar ist.

Durch die neutrale Vorfertigung des Stators kann der Motor je nach Kundenwunsch in kürzester Zeit komplettiert werden. Die Lagerhaltung ist dadurch wesentlich reduziert.

Insgesamt ergeben sich kurz zusammengefaßt nachfolgende Vorteile:
neutraler Motor bezüglich der elektrischen Anschlußart
Fertigungsablauf ist automatisierbar
Einlegen des Wickeldrahtes in die Anschlußkammern kann maschinell erfolgen
Aufbringen der Bauteile für die Anschlußtechnik kann maschinell erfolgen
Statorprüfung kann maschinell erfolgen
Durchfädeln von Litzen oder Kabel durch die Statorbuchse entfällt.
kein Kabel während des Fertigungsablaufs
Kabel kann mit einem vorkonfektionierten Stecker in der Endmontage aufgesteckt werden.
derselbe Stecker kann bei KLK-Ausführung als Klemmleiste dienen
kurze Zeit zwischen Kundenbestellung und Auslieferung
Trefferquote der Lagerstatoren kann bei bis zu 90 % liegen
Reduzierung des Lagerplatzes durch Variantenreduzierung
Reduzierung des Pflegeaufwandes, des Änderungsaufwandes und der Neuanlagen durch Reduzierung der Varianten im Stator-Komplett
Verringerung des Dispositionsaufwandes durch Variantenreduzierung in der Stator-Fertigung
Verkürzung der Wiederbeschaffungszeit

## Patentansprüche

1. Außenläufermotor mit einem Wicklungen aufweisenden Statorpaket, einem Stator-Gehäuse sowie einem Rotor und mit einer Anordnung zum Verbinden der Stator-Wicklungsenden mit einem Anschlußkabel, wobei eine stirnendig auf das Stator-Blechpaket (4) aufsetzbare, ringförmige Klemm- und Anschlußplatte (15) vorgesehen ist, die Aufnahmekammern (21) jeweils für wenigstens ein Wicklungsdrahtende und/oder ein Zwischenkontaktelement dafür aufweist, **dadurch gekennzeichnet, daß** eine auf die Klemm- und Anschlußplatte (15) aufsetzbare, ringförmige Verbindungsplatte (16) mit in die Aufnahmekammern (21) oder die Zwischenkontaktelemente (36) eingreifenden Steckern (26) sowie mit einer Steckerleiste (17), deren Anschlüsse (28) mit den Steckern (26) elektrisch verbunden sind, vorgesehen ist und daß das Statorgehäuse (3) eine Durchtrittsöffnung (32) aufweist, durch welche die Steckerleiste (17) bei mit dem Statorpaket (4) verbundenem Statorgehäuse (3), von außen zugänglich ist und mit der ein Anschlußstecker (10) verbunden ist, der Anschlüsse für die Steckerleisten-Anschlüsse sowie ein Anschlußkabel (11) aufweist.

2. Außenläufermotor nach Anspruch 1, **dadurch gekennzeichnet, daß** der Anschlußstecker (10), an dem die einzelnen Wicklungsenden zugänglich sind, mittels Leiterbrücken (12) auf unterschiedliche elektrische Anschlußarten wie Sternoder Dreieckschaltung bei dreiphasiger Ausführung oder Rechts- beziehungsweise Linkslauf bei einphasiger Ausführung umprogrammierbar ist.

3. Außenläufermotor nach Anspruch 1 oder 2, **dadurch gekennzeichnet, daß** die Klemm- und Anschlußplatte (15) einen radialen Ringflansch (18) mit dem Blechschnitt des Stators entsprechenden Ausnehmungen (19) aufweist und daß sich an den Innenrand des radialen Ringflansches (18) ein etwa axial orientierter Anschlußflansch (20) mit am freien Randbereich befindlichen Aufnahmekammern (21) anschließt.

4. Außenläufermotor nach einem der Ansprüche 1 bis 3, **dadurch gekennzeichnet, daß** die Aufnahmekammern (21) randoffene Nuten (23) für Wicklungsdrahtenden (22) sowie quer dazu im Bereich jeder Nut angeordnete Führungen für die Stecker der Verbindungsplatte (16) oder für Zwischenkontaktelemente aufweisen.

5. Außenläufermotor nach Anspruch 4, **dadurch gekennzeichnet, daß** die Zwischenkontaktelemente (36) einerseits zum Kontaktieren der Wicklungsdrahtenden zum Beispiel in Schneid-Klemm-Technik und andererseits für eine Schiebeklemmverbindung mit den Steckern der Verbindungsplatte (16) ausgebildet sind.

6. Außenläufermotor nach einem der Ansprüche 4 bis 5, **dadurch gekennzeichnet, daß** die Aufnahmekammern (21) vorzugsweise etwa gleichmäßig am Umfang des axialen Anschlußflansches (20) verteilt angeordnet sind.

7. Außenläufermotor nach einem der Ansprüche 1 bis 6, **dadurch gekennzeichnet, daß** die Stecker (26) der Verbindungsplatte (16) entsprechend der Lage der Aufnahmekammern (21) der Klemm- und Anschlußplatte (15) angeordnet sind und daß vorzugsweise als flache Leiterbahnen (27) einer Platine ausgebildete Verbindungsleitungen zu den einzelnen Kontakten der Steckerleiste (17) führen.

8. Außenläufermotor nach einem der Ansprüche 1 bis 7, **dadurch gekennzeichnet, daß** die vorzugsweise als Leiterbahnen ausgebildeten Verbindungsleitungen der Verbindungsplatte (16) jeweils etwa in Umfangsrichtung auf unterschiedlichen Radien zu den Kontakten (28) der Steckerleiste (17) verlaufen und daß benachbarte Verbindungsleitungen vorzugsweise durch Isolierstege oder Isolierwände getrennt sind.

9. Außenläufermotor nach einem der Ansprüche 1 bis 8, **dadurch gekennzeichnet, daß** die Steckerleiste (17) etwa tangential zur runden Verbindungsplatte (16) angeordnet ist und daß sich die zwischen benachbarten Verbindungsleitungen befindlichen Isolierstege oder Isolierwände vorzugsweise bis in den Bereich der Kontaktleisten-Kontakte (28) fortsetzen.

10. Außenläufermotor nach einem der Ansprüche 1 bis 9, **dadurch gekennzeichnet, daß** die ringförmige Verbindungsplatte (16) deckelartig zum Abdecken der Wicklungsköpfe (14) ausgebildet ist und einen inneren Ringflansch sowie einen äußeren Ringflansch hat und daß die Verbindungsleitungen im Zwischenbereich zwischen den Ringflanschen angeordnet sind.

11. Außenläufermotor nach einem der Ansprüche 1 bis 10, **dadurch gekennzeichnet, daß** das Stator-Gehäuse (3) eine zentrale Lagerbuchse (6) aufweist, welche die ringförmige Klemm- und Anschlußplatte (15) sowie die Verbindungsplatte (16) durchgreift.

12. Außenläufermotor nach einem der Ansprüche 1 bis 11, **dadurch gekennzeichnet, daß** die einen radialen Ringflansch (18) aufweisende Klemm- und Anschlußplatte (15) an dessen Außenrand Vorsprünge (25) mit dort befindlichen Aufnahmekammern (21) aufweist.
